# EUROPÄISCHE PATENTSCHRIFT

(11) **EP 0 429 952 B1**
(45) Veröffentlichungstag und Bekanntmachung des Hinweises auf die Patenterteilung: **06.03.1996**
(21) Anmeldenummer: 90121765.3
(22) Anmeldetag: 14.11.1990
(51) Int. Cl.: G01S 7/02, G01S 13/86, G01S 13/91, G01S 17/88, G01C 21/00

(54) **Autonomes Landesystem**
Automatic landing system
Système d'aterrissage autonome

(30) Priorität: 01.12.1989 DE 3939731
(43) Veröffentlichungstag der Anmeldung: 05.06.1991
(73) Patentinhaber: NFS Navigations- und Flugführungs-Systeme GmbH, 89077 Ulm (DE)
(72) Erfinder: Kannamüller, Gerhard, Dipl.-Ing., W-7778 Markdorf (DE); Lux, Peter, Dr. Dipl.-Phys., W-7994 Langenargen (DE); Eibert, Max, Dr. Dipl.-Phys., W-7990 Friedrichshafen 24 (DE)
(74) Vertreter: Fröhling, Werner, Dr.

(56) Entgegenhaltungen:
- EP-A- 0 396 861
- EP-A- 0 396 867
- DE-A- 3 110 691
- GB-A- 2 162 014
- US-A- 3 705 955
- US-A- 4 792 904

## Beschreibung

Die Erfindung betrifft ein autonomes Landesystem oder eine Landehilfe für Luftfahrzeuge unter Verwendung zweier Navigationsvorrichtungen, die aus den EP-A-0 396 867 und EP-A-0 396 861 bekannt sind. Die beiden europäischen Patentanmeldungen fallen unter Artikel 54(3) EPÜ.

Automatische Landesysteme für Luftfahrzeuge sind an sich bekannt und eingeführt. Diese Systeme basieren auf der Positionsvermessung mittels elektromagnetischen Wellen, wie das Instrument Landing System (ILS) oder das Microwave Landing System (MLS), und setzen jeweils entsprechende infrastrukturelle Maßnahmen am Flughafen (Sende- und Empfangseinrichtungen) voraus.

Für ein autonomes System an Bord eines Luftfahrzeuges kann man die Anforderungen in zwei Teilaspekte zerlegen. Zum einen benötigt man ein System zur hochgenauen Vermessung der drei kartesischen Koordinaten (x, y, z) in einem am Landungsort orientierten Koordinatensystem (Relativkoordinaten) und zum anderen einen Bordrechner, der die Anflugtrajektorie entsprechend den Flugeigenschaften und Sicherheitskriterien des entsprechenden Trägers und des Landeortes berechnet und die daraus resultierenden Maßnahmen der Flugführung an die entsprechenden Stelleinheiten (Aktuatoren) weiterleitet.

Auch bei Luftfahrzeugen, die keine automatische Landung durchführen können, die aber dem Piloten Landehilfen anzeigen (man in the loop), ist es wünschenswert, dem Piloten exakte Informationen über seine jeweilige Position zukommen zu lassen.

Aus der GB-A-2 262 014 ist ein Navigations- und Flugführungsverfahren bekannt, bei welchem von einem Luftfahrzeug entlang seines Flugweges von dem überflogenen Gelände zugehörige (Gelände-) Daten ermittelt und mit entsprechenden gespeicherten Daten korreliert werden. Dabei wird das Gelände entlang eines Streifens, der unterhalb des Flugweges liegt, mäanderförmig abgetastet. Aus der Korrelation werden Daten zur Korrektur des Flugweges ermittelt.

Aus der DE-A-3 110 691 ist ein Navigations- und Lenksystem für Flugkörper bekannt, bei welchem zeitlich fortlaufend entlang des Flugweges die Übergänge der Texturen des überflogenen Geländes ermittelt und daraus ein die Übergänge und den Ist-Flugweg charakterisierender Zug abgeleitet wird. Dieser wird mit einem gespeicherten Impulszug verglichen, welcher einem Soll-Flugweg entspricht. Aufgrund des Vergleichs der Impulszüge wird eine mögliche Korrektur des Ist-Flugweges veranlaßt, welcher durch eine Grundnavigationsanlage vorgegeben ist.

Aus der US-A-4 792 904 ist weiterhin ein durch einen Computer unterstütztes Landesystem bekannt. Dabei wird, in der Richtung des Landeanfluges, vor dem vorgegebenen Aufsatzpunkt eine eindeutige geometrische Struktur angebracht, welche von einem in einem Luftfahrzeug befindlichen Sensor abgetastet werden kann.

Aufgabe der Erfindung ist es, für Luftfahrzeuge ein autonomes Landesystem mit erhöhter Positionsgenauigkeit vorzuschlagen oder Landehilfen, die aufgrund genauerer Ortskenntnis eine sicherere Landung zulassen.

Diese Aufgabe wird erfindungsgemäß durch die Kopplung mit einem Navigationssystem gelöst.

Erfindungsgemäß wird ein autonomes Landesystem vorgeschlagen, das bei Annäherung an eine Landebahn den Landeanflug automatisch einleitet oder das als Landehilfe beim Instrumentenanflug fungiert. Im letzteren Fall werden dem Piloten die entsprechend durchzuführenden Aktionen angezeigt. Der Pilot übernimmt den Landeanflug nach dem Anzeigeinstrument.

Zur Navigation werden zwei Vorrichtungen verwendet, die Gegenstand der EP-A-0 396 867 und EP-A-3 396 861 sind.

Mit der Vorrichtung nach EP-A-0 396 867 werden automatisch Entfernungsbilder aufgenommen und geeignete Objekte daraus gesucht, erkannt und ihre Lage mit Referenzinformation verglichen.

In einer Ausführungsform kann das System zusätzlich zur Auswertung von Entfernungsbildern auch normale Bilder (Bilder, deren Bildpunkte der reflektierten Energie entsprechen) verwenden.

In einer weiteren Ausführung kann zusätzlich zur Segmentierung und Merkmalsextraktion eine Einheit zur Bildkorrektur vorgesehen sein, die insbesondere bei niedrigen Flughöhen die geometrischen Fehler durch eine Fächerkorrektur und eine Lagefehlerkorrektur ausgleichen kann.

Dabei kann eine Suche nach bestimmten Typen von Objekten (Häuser, Wald, Straßen, Brücken) durchgeführt werden. Insbesondere kann diese Suche nach speziellen Typen von Objekten automatisch dann angesteuert werden, wenn aufgrund der Referenzinformation diese Typen von Objekten zu erwarten sind.

Eine Positionsbestimmung kann zusätzlich durch Identifikation von einzelnen Objekten oder Objektgruppen durchgeführt werden, wobei mit der Überprüfung der Übereinstimmung die Abweichung der Objekte zur Sollposition bestimmt wird. Ebenso kann die Art der Auswertung abhängig von der Position der Luftfahrzeugs automatisch aufgrund der Referenzinformation gesteuert werden.

In einer weiteren Ausführung kann ein hierarchisches Verfahren zur Objektsegmentierung (z.B. die S-Transformation, veröffentlicht in Archiv für Elektronik und Übertragungstechnik, Band 31 (1977) Seiten 267 bis 274) verwendet werden.

Diese Navigationsvorrichtung wird anhand von drei Figuren näher beschrieben.

Es zeigen:
Fig. 1 ein Blockschaltbild einer Navigationsvorrichtung
Fig. 2 das zeilenweise Abtasten beim Überflug
Fig. 3 ein abzutastendes Objekt

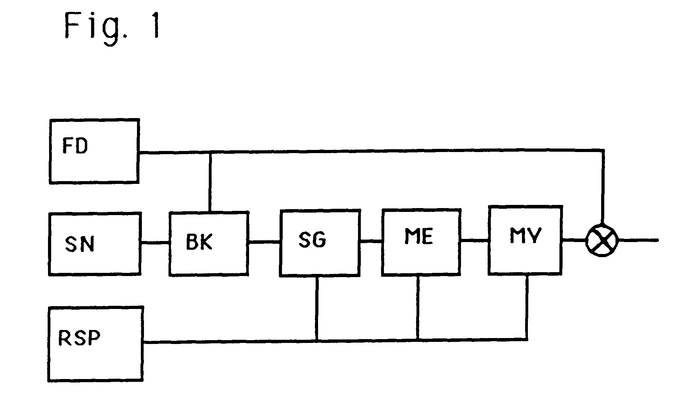

Fig. 1 zeigt ein Blockschaltbild eines Geräts, mit dem die Navigation durchgeführt werden kann. Es sind vorgesehen ein Sensor SN, eine Bildkorrektur BK, in die die Flugzustandsdaten mit eingehen, eine Segmentierungseinheit SG, eine Merkmalsextraktionseinheit ME und eine Einheit zum Merkmalsvergleich MV mit gespeicherten Referenzdaten (Referenzspeicher RSP).

### Die Vorrichtung funktioniert wie folgt:

Der Sensor SN nimmt eine Abbildung des überflogenen Gebietes auf. Die Bildkorrekturschaltung BK erzeugt daraus ein entzerrtes Bild des Geländes. In den folgenden Stufen der Verarbeitung werden Objekte, die zur Navigation geeignet sind, wie beispielsweise Gebäude, Waldstücke, Baumgruppen, Einzelbäume, Dämme, Straßen, Brücken, Bahnanlagen u.s.w. segmentiert (Segmentierungseinheit SG) und durch Attribute wie Objektklasse, Lage und Länge der Begrenzungsvektoren, Höhe, Volumen, Momente, Trägheitsachsen, Formparameter, Position von Mittelpunkt, Schwerpunkt oder Berandungspunkten oder ähnlichem beschrieben (Merkmalsextraktionseinheit ME). Eine Vergleichsschaltung (MV) prüft, ob die Folge dieser Merkmale im wesentlichen mit den Merkmalen des eingespeisten Referenzbildes (in RSP) übereinstimmen. Aus der Position der Objekte relativ zur Referenzposition erhält man einen Aufdatwert zur Korrektur des Basisnavigationssystems. Die Bestimmung und Berechnung der Merkmale wird vor dem Flug entweder manuell, interaktiv oder automatisch in entsprechenden Referenzplanungsstationen durchgeführt. Aus Karten, Luftbildern, Satellitenfotographien oder aus digital vorliegenden topographischen Informationen (Digital Land Mass System, DLMS) wird das Fluggebiet ausgewählt und darin identifizierbare Objekte gesucht und gewichtet. Als Merkmale werden Eigenschaften von Objekten genommen, die vom Sensor vermessen werden können, aus dem Referenzmaterial extrahierbar sind und hinreichend oft auftreten. Als Sensor werden Systeme zur Aufnahme von Entfernungsbildern oder eine Kombination von Aufnahmegeräten für Entfernungsbilder und für Reflexionsbilder benutzt.

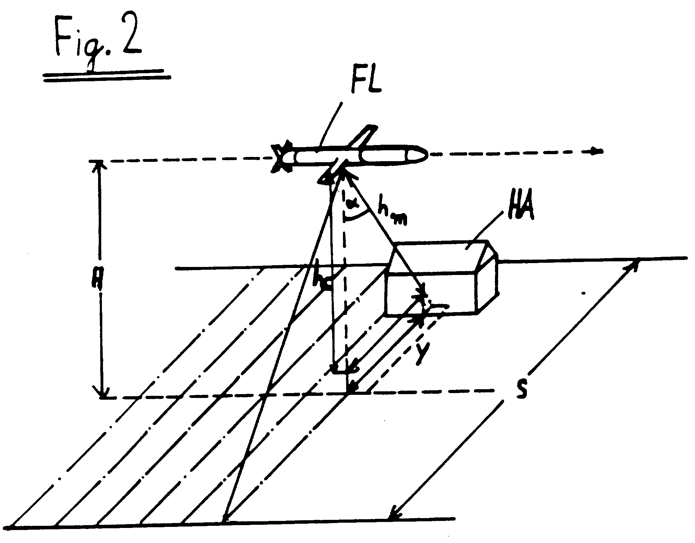

Fig. 2 zeigt einen Flugkörper FL, der mit einer solchen Navigationsvorrichtung arbeitet. Er besitzt einen Sensor, der Entfernungsbildstreifen der Breite S aufnimmt, wobei er das überflogene Gebiet in einem gewissen Winkelbereich 2 α Zeile für Zeile abtastet. Dazu sendet er Licht, welches z.B. von einem Laser erzeugt wurde, aus und registriert das zurückkommende Signal. Aus der Laufzeit und dem Winkel kann so ein Entfernungsbildstreifen des überflogenen Gebietes gewonnen werden. In der Figur sind eingezeichnet die Flughöhe H, der Winkel α, die Breite S des beobachteten Streifens, die Entfernung hm zu einem Objekt, hier dem Haus HA, die senkrechte Entfernung hc und der Abstand y von der Mittellinie des Flugpfades zum Objekt Haus HA.

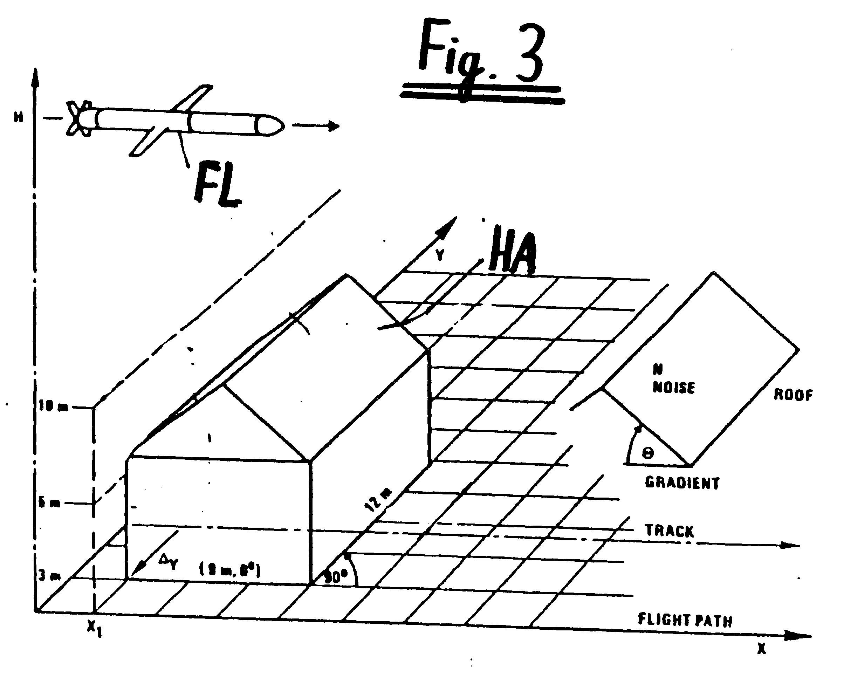

Fig. 3 zeigt als beispielhaftes Objekt für ein Tiefenprofilbild ein Haus HA. Als Merkmale sind beispielsweise die Position des Hauses HA und die Begrenzungsvektoren des Grundrisses eingespeichert. Diese werden beim Überflug aus den Tiefeninformationen extrahiert. Diese Merkmale lassen sich aus.den Entfernungsbildern mit entsprechender Entfernungsauflösung und Ortsauflösung anhand von Segmentierungsverfahren berechnen.

Eine andere Navigationsvorrichtung, die in dem erfindungsgemäßen Landesystem verwendet wird, ist die Vorrichtung nach der EP-A-0 396 861. Von dieser Vorrichtung wird mit einem Radar- oder Laserradar-Profilmeßsystem das überflogene Höhenprofil vermessen.

Diese Profile gestatten mit geeigneten Auswerteverfahren die Unterscheidung zwischen Wald, bebautem Gebiet und eventuellen Sonderobjekten wie Flüssen. Durch Hinzunahme der Amplitude des reflektierten Signals kann ein weiteres Merkmal für eine Entscheidungshilfe gewonnen werden.

Ist ein entsprechender Streifen segmentiert und, falls nötig, mit Hilfe vermessener Flugzustandsdaten korrigiert, so kann ein Vergleich mit gespeicherter Referenzinfomation erfolgen. Diese Referenz besteht aus der topographischen Information der Erdoberfläche wie beispielsweise Bewuchs oder Bebauung. Diese Information kann aus Karten oder Luftbildern gewonnen und entsprechend abgespeichert werden.

Der Vergleich des vermessenen und entsprechend ausgewerteten Streifen mit der Referenzinformation führt zu Positionsbestimmung und zu einer entsprechenden Aufdatung der Navigationseinheit des Trägers.

Wesentlicher Unterschied dieser Vorrichtung gegenüber der Vorrichtung nach der EP-A-0 396 867 ist, daß nur eindimensionale Streifen des überflogenen Gebiets aufgenommen werden.

Die Weiterverarbeitung der aufgenommenen Daten jedoch geschieht auf ähnliche Weise wie in der Vorrichtung nach der EP-A-0 396 867, so daß das Blockschaltbild in Fig. 1 im wesentlichen auch auf diese Vorrichtung anzuwenden ist.

Diese Navigationsvorrichtung wird anhand von zwei Figuren näher beschrieben:

Es zeigen:

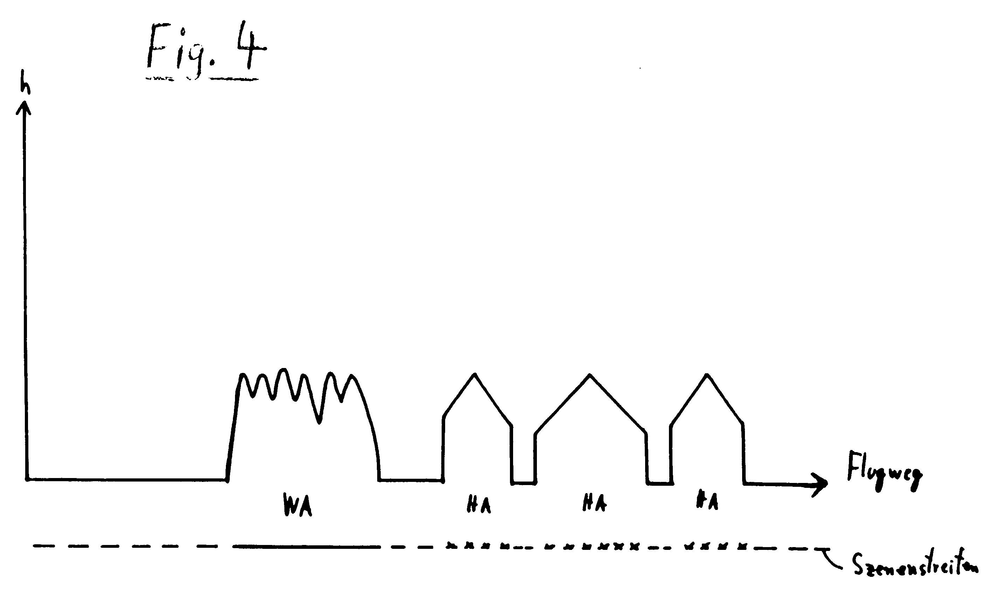

Fig. 4 ein abgetastetes Profil und einen Szenenstreifen

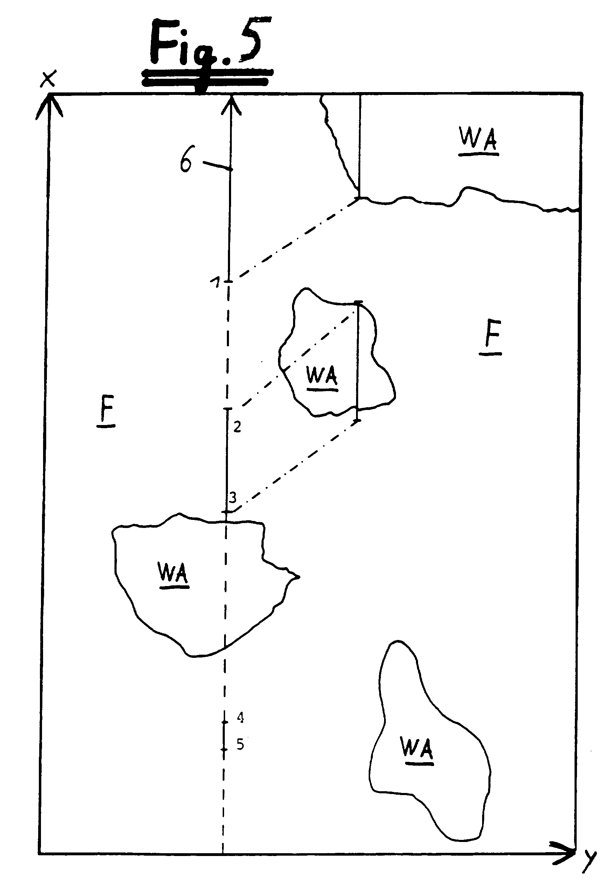

Fig. 5 ein Verfahren der Positionsbestimmung.

Fig. 4 zeigt beispielhaft ein abgebildetes Profil (Höheninformation h über den Flugweg), das sich etwa aus der Meßinformation des Waldes WA und der überflogenen Häuser HA zusammensetzt, wie es der Flugkörper beim Überfliegen aufgenommen hat.

Fig. 5 zeigt eine Variante des Vergleichsverfahrens, wie es im Merkmalsvergleicher MV der Vorrichtung durchgeführt wird. Gezeichnet ist ein Ausschnitt aus einer Landkarte im Draufblick (Koordinate x in Flugrichtung und Koordinate y quer dazu), wie sie im Fluggerät FL gespeichert ist. Die Karte enthält hier Feldfläche F und Waldstücke WA. Weiterhin ist eingezeichnet der Szenenstreifen 6, bei dem die durchgezogen gezeichneten Anteile Wald bedeuten, die gestrichelt gezeichneten Anteile Feld. Der Szenenstreifen 6, der dem Szenenstreifen der Fig. 4 in etwa entspricht, liegt an der Stelle der Karte, in der das Basisnavigationssystem berechnet hat, daß der Flugkörper FL sein sollte. Der Szenenstreifen 6 besteht aus vermessenen und segmentierten Abschnitten. Der Übersichtlichkeit halber sei nur das Beispiel für Wald/Feld erläutert. Für bebautes Gebiet oder Gebiete ähnlicher Charakterisierung wie Gewässer, Plantagen, Straßen usw. arbeitet das Verfahren analog. Der eingezeichnete Pfeil deutet die Flugrichtung an. Markiert sind weiterhin die Übergänge Wald/Feld 1, Feld/Wald 2, Wald/Feld 3, Feld/Wald 4 und Wald/Feld 5. Wald/Feld wird als eine Kennzeichnung benutzt, Feld/Wald dagegen als eine andere Information. Der Szenenstreifen 6 wird nun probeweise in y-Richtung (quer zur Flugrichtung) und nachfolgend in x-Richtung so lange verschoben, (strichpunktiert gezeichnet), bis ein Abstandsmaß zu den entsprechenden Übergängen (also ebenso Feld/Wald respektive Wald/Feld) minimal wird. Als Abstandsmaß kann dabei MAD (Mean Absolute Difference) oder MSD (Mean Square Difference) als quadratische Abweichung benutzt werden. Dieses Verfahren setzt nicht voraus, daß die Szenenstrecke geradlinig verläuft. Da durch das im allgemeinen in Flugzeugen und Flugkörpern vorhandene INS mit einem Rechner für Koppelnavigation die Position der Meßpunkte berechnet wird und diese Systeme eine hohe Kurzzeitgenauigkeit haben, läßt sich die Geschwindigkeit und Position erkennen.

Die Navigation nach eindimensionalen Profilen (z.B. nach der EP-A-0 396 861 ist im Gegensatz zu den scannenden, bildgebenden Verfahren (z.B. nach der EP-A-0 396 867) für die bei Landeanflügen geforderten Genauigkeiten zu ungenau. Bei der Navigation nach eindimensionalen Profilen, insbesondere bei der Verwendung von Radaren schlechterer Ortsauflösung (Radar-Höhenmesser) oder für redundante Messungen können in entsprechendem Abstand von der Landebahn einfache Hilfssignaturen oder Hilfsstrukturen angebracht werden, die die genaue Bestimmung der lateralen Position ermöglichen. Nach der im allgemeinen etwas ungenaueren Anflugphase wird durch Überflug dieser Merkmale die laterale Positionsgenauigkeit so stark gesteigert, daß zum weiteren Anflug die INS-Genauigkeit des Landesystems ausreicht. Die Höhenmessung wird kontinuierlich durch das Radar oder das Laser-Radar durchgeführt.

Als Hilfsstrukturen können geometrisch eindeutige Objekte wie eine Kombination von Balken, Brettern oder Stangen mit geeignetem Radarquerschnitt, Reflexionsvermögen oder Höhenstrukturen vorgesehen sein. Bei optischen Verfahren sollten die Hilfsstrukturen gut erkennbar sein und sich vom Hintergrund abheben. Bei entfernungsmessenden Verfahren sollten die Hilfsstrukturen einen für das Meßsystem erkennbaren Höhensprung über Grund haben. Auf diese Weise können beim Überflug und bei Kenntnis der Überflugrichtung (die mit hoher Genauigkeit vom INS-System geliefert wird) unzweideutige Positionsbestimmungen geliefert werden.

### Vorteile der Erfindung sind:

Ein mit einem derartigen System ausgestattetes Flugzeug kann ohne oder mit nur geringem Aufwand (Balken etc.) modifizierte Flugplätze oder Ausweich-Lande- bahnen (Autobahnen) anfliegen und bei Tag/Nacht auch ohne Befeuerung automatisch landen (Anwendung z.B. bei kleinen Transportflugzeugen auf kleinen Flugplätzen).

Bei der mit einem Radar-Navigationssystem ausgestatteten Variante wird weitgehende Wetterunabhängigkeit erreicht (Nebel, Dunst). Im Verteidigungsfall kann der Flughafen unbeleuchtet sein und braucht keine Sendeeinrichtungen einzuschalten (Tarnungsmaßnahmen).
Außerdem bedeuten Einrichtungen wie ILS oder MLS im Gegensatz zur erfindungsgemäß vorgeschlagenen Einrichtung erhebliche Investitionen, so daß diese Systeme zur Zeit nur bei grösseren Flughäfen im Einsatz sind.

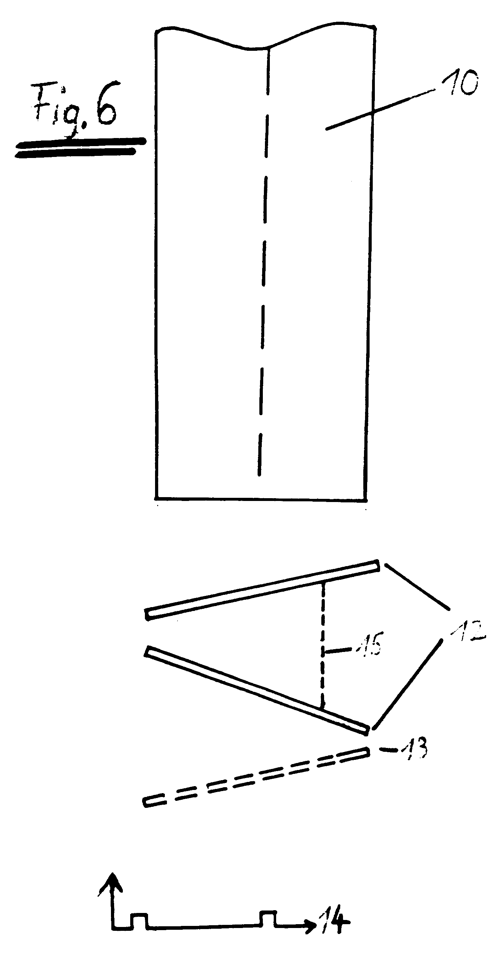

Die Funktionsweise der Positionsbestimmung wird anhand des folgenden Ausführungsbeispiels der Erfindung und der Fig. 6 erläutert.

### Die Fig.6 zeigt

- die Landebahn 10,
- die erhöht angebrachten Hilfsstrukturen 12 (beispielsweise Balken, die von oben gesehen zueinander nicht parallel verlaufen),
- eine redundante Hilfsstruktur 13 zur Erhöhung von Sicherheit und Genauigkeit,
- das zu vermessende Höhenprofil 14 und
- die Einpassung 15 des Höhenprofils 14 in die bekannte Hilfsstruktur 12 zur Positionsermittlung.

Die Hilfsstrukturen 12 werden beim Überflug (der hier z.B. in der mit 15 gezeigten Linie erfolgt), vom bordeigenen Höhenmeßsystem als Strukturen mit grösserer Höhe erkannt. Wie in dem vermessenen Höhenprofil 14 zu erkennen ist, ergeben die beiden Hilfsstrukturen 12 jeweils deutliche Signale. Der zeitliche Abstand der Signale - in Verbindung mit der bekannten Fluggeschwindigkeit - läßt einen eindeutigen Schluß auf die Lage des Flugzeugs in bezug auf die Hilfsstrukturen 12 zu. Weitere Strukturen 13 können vorgesehen sein, um die Meßgenauigkeit des Gesamtsystems zu erhöhen. Die Entfernungen der Hilfsstrukturen 12 von der Landebahn 10 sind hier nicht maßstäblich gezeichnet. Sie können im km-Bereich liegen und zum Beispiel 3 - 4 km betragen.

Zusätzlich oder alternativ kann die Stärke des reflektierten Signals (Amplitudenauswertung) zur Bestimmung der Lage der überflogenen Hilfsstrukturen herangezogen werden.

Das Radarsystem hat gegenüber dem Laser-Radar-System den Vorteil der geringeren Abhängigkeit von Wettereinflüssen.

## Patentansprüche

1. Autonomes Landesystem, in welchem eine Vorrichtung verwendet wird für die selbständige Navigation sowie die Navigationsaufdatung eines Luftfahrzeuges (FL) bei einem Landeanflug längs einer vorgebbaren Trajektorie, wobei die Vorrichtung besteht aus
- einem Referenzspeicher (RSP), in dem Soll-Merkmale eines vorgebbaren Soll-Flugweges (Trajektorie) des Luftfahrzeuges (FL) gespeichert sind,
- einem Sensor (SN) für die Abtastung des von dem Luftfahrzeug (FL) überflogenen Geländes,
- einer dem Sensor (SN) nachgeschalteten Signalverarbeitungseinrichtung für die Bildung von Ist-Merkmalen, die entsprechend der Abtastung gebildet und dem tatsächlichen Ist-Flugweg des Luftfahrzeuges (FL) zugeordnet werden,
- einer Verleichsschaltung (MV), in welcher für das Luftfahrzeug (FL) durch Vergleich der Soll- mit den Ist-Merkmalen eine Korrektur für den Ist-Flugweg ermittelt wird und
- einer Steuerungseinrichtung für die Steuerung des Luftfahrzeuges (FL) entsprechend der Positionsbestimmung sowie einer daraus ableitbaren Korrektur für die Angleichung des Ist-Flugweges an den Soll-Flugweg, dadurch gekennzeichnet,
- daß der Sensor (SN) als ein, senkrecht zu dem Ist-Flugweg, das überflogene Gelände zeilenweise abbildendes, entfernungmessendes System ausgebildet ist, so daß von dem Gelände sowie darauf befindlichen Objekten ein Entfernungsbild, das abgebildeten Objektpunkten zugeordnete Entfernungen als Bilddaten enthält, entsteht,
- daß die dem Sensor (SN) nachgeschaltete Signalverarbeitungsvorrichtung sowie ein Referenzspeicher (RSP) für Entfernungsbilder ausgelegt sind,
- daß eine Segmentierungseinheit (SG) vorhanden ist, die in dem von dem Sensor (SN) ermittelten Entfernungsbild die für eine Navigation geeigneten Objekte segmentiert und eine Merkmalsextraktionseinheit (ME), die die Objekte mit kennzeichnenden, vorgebbaren Merkmalen beschreibt,
- daß in der Vergleichsschaltung (MV) geprüft wird, ob die Folge dieser Merkmale im wesentlichen mit den Merkmalen eines in einem Referenzspeicher (RSP) eingespeicherten Referenzbildes übereinstimmt,
- daß aus einem Vergleich der Lagen der ermittelten und der gespeicherten Objekte ein Aufdatwert zur Korrektur des Ist-Flugweges bestimmt wird und
- daß in der Nähe der Landeposition vorgebbare und in Entfernungsbildern auswertbare Hilfsstrukturen (12), die als eindeutige geometrische Konfigurationen ausgebildet sind, vorhanden sind.

2. Autonomes Landesystem, in welchem eine Vorrichtung verwendet wird für die selbständige Navigation sowie die Navigationsaufdatung eines Luftfahrzeuges (FL) bei einem Landeanflug längs einer vorgebbaren Trajektorie, wobei die Vorrichtung besteht aus
- einem Referenzspeicher (RSP), in dem Soll-Merkmale eines vorgebbaren Soll-Flugweges (Trajektorie) des Luftfahrzeuges (FL) gespeichert sind,
- einem Sensor (SN) für die Abtastung des von dem Luftfahrzeug (FL) überflogenen Geländes,
- einer dem Sensor (SN) nachgeschalteten Signalverarbeitungseinrichtung für die Bildung von Ist-Merkmalen, die entsprechend der Abtastung gebildet und dem tatsächlichen Ist-Flugweg des Luftfahrzeuges (FL) zugeordnet werden,
- einer Vergleichsschaltung (MV), in welcher für das Luftfahrzeug (FL) durch Vergleich der Soll- mit den Ist-Merkmalen eine Korrektur für den Ist-Flugweg ermittelt wird und
- einer Steuerungseinrichtung für die Steuerung des Luftfahrzeuges (FL) entsprechend der Positionsbestimmung sowie einer daraus ableitbaren Korrektur für die Angleichung des Ist-Flugweges an den Soll-Flugweg, dadurch gekennzeichnet,
- daß der Sensor (SN) als entfernungsmessendes System ausgebildet ist, das fortlaufend entlang des Ist-Flugweges den Abstand zu dem überflogenen Gelände und den darauf vorhandenen Objekten bestimmt, so daß ein eindimensionales Oberflächenprofil ermittelt wird,
- daß eine Segmentierungseinheit (SG) vorhanden ist, die aus dem Oberflächenprofil die für die Navigation geeigneten Objekte segmentiert und eine Merkmalsextraktionseinheit (ME), die die Objekte mit kennzeichnenden, vorgebbaren Merkmalen beschreibt,
- daß in ein Referenzspeicher (RSP) vorhanden ist, in dem ein dem Soll-Flugweg zugeordnetes eindimensionales Oberflächenprofil gespeichert ist,
- daß in der Vergleichsschaltung (MV) aus einem zweidimensionalen Versatz (Parallelverschiebung) gleicher Texturen, die in den ermittelten und gespeicherten Oberflächenprofilen vorhanden sind, ein Aufdatwert zur Korrektur des Ist-Flugweges bestimmt wird und
- daß in der Nähe der Landeposition vorgebbare und als Textur auswertbare Hilfsstrukturen (12), die als eindeutige geometrische Konfigurationen ausgebildet sind, vorhanden sind.

## Claims

1. Autonomous landing system, in which a device is used for the independent navigation as well as the updating of the navigation of an aircraft (FL) during a landing approach flight along a presettable trajectory, wherein the device consists of
- a reference storage device (RSP), in which the target features of a presettable target flight path (trajectory) of the aircraft (FL) are stored,
- a sensor (SN) for the scanning of the terrain overflown by the aircraft (FL),
- a signal-processing equipment connected downstream of the sensor (SN) and for the formation of actual values which are formed according to the scanning and associated with the actual flight path of the aircraft (FL),
- a comparator circuit (MV), in which a correction for the actual flight path is determined by comparison of the target features with the actual features and
- a control equipment for the control of the aircraft (FL) according to the ascertained position as well as a correction derivable therefrom for the assimilation of the actual flight path to the target flight path, characterised thereby,
- that the sensor (SN) is constructed as a system which measures the distance and scans the overflown terrain line by line perpendicularly to the actual flight path so that a distance image, which contains distances associated with imaged object points as image data, arises of the terrain as well as of objects situated thereon,
- that the signal-processing equipment connected downstream of the sensor (SN) as well as a reference storage device (RSP) are designed for distance images,
- that a segmenting unit (SG) is present, which in the distance image ascertained by the sensor (SN) segments the objects suitable for a navigation and a feature-extracting unit (ME), which describes the objects by presettable identifying features,
- that it is checked in the comparator circuit (MV) whether the sequence of these features agrees substantially with the features of a reference image written into a reference storage device (RSP),
- that an updating value for the correction of the actual flight path is determined from a comparison of the positions of the ascertained and the stored objects and
- that auxiliary structures (12) are present, which are presettable in the proximity of the landing position and evaluatable into distane images and which are formed as unambiguous geometric configurations.

2. Autonomous landing system, in which a device is used for the independent navigation as well as the undating of the navigation of an aircraft (FL) during a landing approach flight along a presettable trajectory, wherein the device consists of
- a reference storage device (RSP), in which the target features of a presettable target flight path (trajectory) of the aircraft (FL) are stored,
- a sensor (SN) for the scanning of the terrain overflown by the aircraft (FL),
- a signal-processing equipment connected downstream of the sensor (SN) and for the formation of actual values which are formed according to the scanning and associated with the actual flight path of the aircraft (FL),
- a comparator circuit (MV), in which a correction for the actual flight path is determined by comparisons of the target features with the actual features and
- a control equipment for the control of the aircraft (FL) according to the ascertained position as well as a correction derivable therefrom for the assimilation of the the actual flight path to the target flight path, characterised thereby,
- that the sensor (SN) is constructed as a system which measures the distance and
continuously ascertains the spacing from the overflow terrain and the objects present thereon along the actual flight path,
- that a segmenting unit (SG) is present, which from the surface profile segments the objects suitable for a navigation and a feature-extracting unit (ME), which describes the objects by presettable identifying features,
- that a reference storage device (RSP) is present, in which a unidimensional surface profile associated with the target flight path is stored,
- that an updating value for the correction of the actual flight path is determined in the comparator circuit (MV) from a two-dimensional shift (parallel displacement) of like textures which are present in the ascertained and stored surface profiles and
- that auxiliary structures (12) are present, which are presettable in the proximity of the landing position and evaluatable into distane images and which are formed as unambiguous geometric configurations.

## Revendications

1. Système d'atterrissage autonome dans lequel est utilisé un dispositif pour la navigation autonome ainsi que l'actualisation des données de navigation d'un aéronef (FL) lors d'une approche d'atterrissage le long d'une trajectoire pouvant être préfixée, ce dispositif comprenant
- une mémoire de références (RSP) dans laquelle sont mémorisés des repères prescrits d'une trajectoire de vol prescrite, pouvant être préfixée, de l'aéronef (FL),
- un capteur (SN) pour l'exploration ou le balayage du terrain survolé par l'aéronef (FL),
- un dispositif de traitement de signal monté à la suite du capteur (SN) et servant à établir des repères réels, qui sont formés en conformité avec l'exploration et coordonnés à la trajectoire de vol réelle de l'aéronef (FL),
- un circuit de comparaison (MV) dans lequel, par la comparaison des repères prescrits avec les repères réels, une correction de la trajectoire de vol réelle est élaborée pour l'aéronef (FL) et
- un dispositif de commande pour commander l'aéronef (FL) en conformité avec la position déterminée et une correction qui peut en être derivée, afin de rendre la trajectoire de vol réelle conforme à la trajectoire de vol prescrite, caractérisé en ce
- que le capteur (SN) est réalisé comme un système de mesure de distance qui reproduit ligne par ligne le terrain survolé, perpendiculairement à la trajectoire de vol réelle, de sorte qu'il se forme du terrain et des objets se trouvant sur lui une image de distance ou d'éloignement contenant, en tant que données d'image, des distances coordonnées à des points d'objet reproduits,
- que le dispositif de traitement de signal monté à la suite du capteur (SN), ainsi qu'une mémoire de références (RSP), sont conçus pour des images de distance,
- qu'une unité de segmentation (SG) est prévue pour segmenter les objets convenant à une navigation dans l'image de distance fournie par le capteur (SN) et qu'une unité (ME) d'extraction de repères décrit les objets par des repères marquants, pouvant être préfixés,
- que le circuit de comparaison (MV) vérifie si la succession de ces repères concorde pour l'essentiel avec les repères d'une image de référence mémorisée dans une mémoire de références (RSP),
- qu'une valeur d'actualisation pour corriger la trajectoire de vol réelle est déterminée à partir d'une comparaison des positions des objets relevés et des objets mémorisés et
- que des structures auxiliaires (12), réalisées comme des configurations géométriques univoques, structures qui peuvent être préfixées et sont exploitables dans des images de distance, sont présentes à proximité du point d'atterrissage.

2. Système d'atterrissage autonome dans lequel est utilisé un dispositif pour la navigation autonome ainsi que l'actualisation des données de navigation d'un aéronef (FL) lors d'une approche d'atterrissage le long d'une trajectoire pouvant être préfixée, ce dispositif comprenant
- une mémoire de références (RSP) dans laquelle sont mémorisés des repères prescrits d'une trajectoire de vol prescrite, pouvant être préfixée, de l'aéronef (FL),
- un capteur (SN) pour l'exploration ou le balayage du terrain survolé par l'aéronef (FL),
- un dispositif de traitement de signal monté à la suite du capteur (SN) et servant à établir des repères réels, qui sont formés en conformité avec l'exploration et coordonnés à la trajectoire de vol réelle de l'aéronef (FL),
- un circuit de comparaison (MV) dans lequel, par la comparaison des repères prescrits avec les repères réels, une correction de la trajectoire de vol réelle est élaborée pour l'aéronef (FL) et
- un dispositif de commande pour commander l'aéronef (FL) en conformité avec la position déterminée et une correction qui peut en être derivée, afin de rendre la trajectoire de vol réelle conforme à la trajectoire de vol prescrite, caractérisé en ce
- que le capteur (SN) est réalisé comme un système de mesure de distance, qui détermine en continu, le long de la trajectoire de vol réelle, la distance par rapport au terrain survolé et aux objets se trouvant sur lui, de sorte qu'un profil unidimensionnel de la surface est établi,
- qu'une unité de segmentation (SG) assure la segmentation, à partir du profil de surface, des objets convenant pour la navigation et qu'une unité (ME) d'extraction de repères décrit les repères, pouvant être préfixés, qui caractérisent les objets,
- qu'un profil de surface unidimensionnel, coordonné à la trajectoire de vol prescrite, est mémorisé dans une mémoire de références (RSP),
- que le circuit de comparaison (MV) détermine une valeur d'actualisation pour corriger la trajectoire de vol réelle à partir d'un décalage bidimensionnel (décalage parallèlement à elles-mêmes) de textures identiques présentes dans les profils de surface relevés et mémorisés et
- que des structures auxiliaires (12), réalisées comme des configurations géométriques univoques, structures qui peuvent être préfixées et sont exploitables comme des textures, sont présentes à proximité du point d'atterrissage.
